# EUROPÄISCHE PATENTSCHRIFT

(11) **EP 3 652 477 B1**
(45) Veröffentlichungstag und Bekanntmachung des Hinweises auf die Patenterteilung: **23.06.2021**
(21) Anmeldenummer: 18748854.9
(22) Anmeldetag: 10.07.2018
(51) Int. Cl.: F16L 53/35, F16L 53/70

(54) **ROHRLEITUNGSELEMENT MIT EINER INTEGRIERTEN HEIZ- UND/ODER KÜHLVORRICHTUNG UND VERFAHREN ZU SEINER HERSTELLUNG**
PIPELINE ELEMENT HAVING AN INTEGRATED HEATING AND/OR COOLING DEVICE AND METHOD FOR PRODUCING SAME
ÉLÉMENT DE TUYAUTERIE À DISPOSITIF DE CHAUFFAGE ET/OU DE REFROIDISSEMENT INTÉGRÉ ET PROCÉDÉ POUR LE PRODUIRE

(30) Priorität: 11.07.2017 DE 102017006535
(43) Veröffentlichungstag der Anmeldung: 20.05.2020
(73) Patentinhaber: Gebr. Krallmann GmbH, 32120 Hiddenhausen (DE)
(72) Erfinder: KLEPPSCH, Matthias, 32584 Löhne (DE); BREXELER, Ingo, 58300 Wetter (DE)
(74) Vertreter: Lichti - Patentanwälte Partnerschaft mbB
(86) Internationale Anmeldenummer: PCT/EP2018/000350
(87) Internationale Veröffentlichungsnummer: WO 2019/011466

(56) Entgegenhaltungen:
- EP-A1- 1 375 997
- WO-A1-2014/016331
- WO-A1-2016/039132

## Beschreibung

Die Erfindung betrifft ein Rohrleitungselement mit einer integrierten Heiz- und/oder Kühlvorrichtung, gemäss den im Oberbegriff von Anspruch 1 definierten Merkmalen, wie es beispielsweise aus EP-A-1 375 997 bekannt ist.

Ferner betrifft die Erfindung ein Verfahren zur Herstellung eines entsprechenden Rohrleitungselementes.

Beim Transport von Medien und insbesondere Gasen, die einen hohen Feuchtigkeitsgehalt aufweisen, kommt es bei niedrigen Temperaturen zu einer Kristallisation des in dem Gas enthaltenen Wassers. Durch die Kristallisation bzw. die Eisbildung innerhalb der Rohrleitung, in der das Gas gefördert wird, kommt es zu einer Verringerung des Strömungsquerschnittes und gegebenenfalls zu einem völligen Verschluss des Strömungsquerschnittes in Folge der Vereisung. Um dies zu vermeiden, ist es bekannt, in die Rohrleitung ein Rohrleitungselement einzusetzen, in das eine Heizvorrichtung integriert ist. Beim Durchströmen dieses Rohrleitungselementes wird das Medium (Gas) auf die gewünschte Temperatur gebracht und somit eine Vereisung verhindert.

Im folgenden wird beispielhaft von einer Erwärmung des Mediums mittels einer Heizvorrichtung ausgegangen, jedoch kann alternativ oder zusätzlich dazu auch eine Kühlvorrichtung vorgesehen sein.

Es ist bekannt, für das Rohrleitungselement einen Rohrkörper aus Kunststoff vorzusehen, der so in die Rohrleitung integriert wird, dass in seinem Innenraum ein Strömungskanalabschnitt gebildet ist, so dass ein Medium (Gas) durch seinen Innenraum strömt. Auf der Außenseite des Rohrkörpers ist ein elektrisches Heizelement beispielsweise in Form eines Thermistors (thermally-sensitive resistor) vorgesehen. Es handelt sich dabei um einen elektrischen Widerstand, dessen Wert sich mit der Temperatur reproduzierbar ändert. Da es sich bei einem Thermistor um ein vorgefertigtes Bauteil handelt, muss dieses an den Rohrkörper außenseitig angebracht werden, was insbesondere durch Auflöten oder durch Klemmen geschieht. Der Thermistor, der als flache Scheibe ausgebildet ist, liegt mit einer Seitenfläche an der Außenwandung des Rohrkörpers an und gibt seine Wärme an den Rohrkörper und damit an das im Rohrkörper strömende Medium ab. Um die Wärme des Thermistors über den Umfang des Rohrkörpers zu verteilen, kann ein metallisches Wärmeleitelement vorgesehen sein, das mit dem Thermistor in Anlage steht.

Nachteilig bei dieser Ausgestaltung ist insbesondere, dass die Wärmeübertragung von dem Thermistor auf das Wärmeleitelement bzw. den Rohrkörper relativ gering ist, da der Thermistor nur einseitig mit dem Wärmeleitelement oder dem Rohrkörper in Anlage steht.

Darüber hinaus ist der konstruktive Aufbau eines entsprechenden Rohrleitungselementes kompliziert und fertigungstechnisch aufwändig, wodurch die Herstellung des Rohrleitungselementes teuer ist.

Der Erfindung liegt die Aufgabe zugrunde, ein Rohrleitungselement der genannten Art zu schaffen, mit dem ein hoher Wirkungsgrad des integrierten elektrischen Heiz- und/oder Kühlelementes zu erzielen ist und das einen konstruktiv einfachen Aufbau aufweist.

Darüber hinaus soll ein Verfahren geschaffen werden, mit dem sich das Rohrleitungselement in einfacher Weise herstellen lässt.

Diese Aufgabe wird hinsichtlich des Rohrleitungselementes durch ein Rohrleitungselement mit den Merkmalen des unabhängigen Anspruchs 1 und hinsichtlich des Verfahrens mit den Merkmalen der beiden unabhängigen Ansprüche 18 und 19 gelöst.

Dabei ist vorgesehen, dass der Rohrkörper eine in seinen Innenraum hervorstehende Kammer aufweist, die von einer Kammerwandung begrenzt und gegenüber dem Innenraum des Rohrkörpers abgeschlossen ist, dass das Heiz- und/oder Kühlelement in die Kammer eingesetzt ist und dass zumindest zwei von einander unabhängige metallische Wärmeleitelemente vorgesehen sind, die jeweils mit einem Ansatz in die Kammer eingreifen und auf entgegengesetzten Seiten mit dem Heiz- und/oder Kühlelement in Anlage stehen.

Erfindungsgemäß wird von der Grundüberlegung ausgegangen, das Heiz- und/oder Kühlelement nicht auf der Außenseite des Rohrkörpers, sondern möglichst nahe am zu erwärmenden Medium (Gas) und deshalb im Innenraum des Rohrkörpers anzuordnen. Da aus Gründen der Prozesssicherheit vermieden werden sollte, dass das Heiz- und/oder Kühlelement in direktem Kontakt mit dem Medium (Gas) kommt, ist im Innenraum des Rohrkörpers eine Kammer angeordnet, die von dem Medium umströmt ist. Die Kammer ist von der Kammerwandung begrenzt, die sicherstellt, dass der Innenraum der Kammer gegenüber dem Innenraum des Rohkörpers vollständig getrennt und abgeschlossen ist. Es ist somit zuverlässig vermieden, dass das Medium (Gas) mit dem in der Kammer befindlichen elektrischen Heiz- und/oder Kühlelement in Kontakt kommt.

Darüber hinaus sind zumindest zwei von einander unabhängige Wärmeleitelemente vorgesehen, die insbesondere von einem metallischen Körper oder einer metallischen Schicht gebildet sind und dafür sorgen, dass die von dem Heiz- und/oder Kühlelement abgegebene Wärme nicht nur über die Kammerwandung auf das Medium einwirkt, sondern vorzugsweise über den Umfang des Rohrkörpers verteilt wird. Die metallischen Wärmeleitelemente greifen jeweils mit einem vorzugsweise angeformten Ansatz in die Kammer ein und stehen auf entgegengesetzten Seiten mit dem Heiz- und/oder Kühlelement, beispielsweise dem scheibenförmigen Thermistor in Anlage. Vorzugsweise stehen die Wärmeleitelemente vollflächig mit dem Thermistor in Anlage, so dass eine gute Wärmeübertragung gegeben ist.

In Weiterbildung der Erfindung kann vorgesehen sein, dass das Heiz- und/oder Kühlelement zwischen den Wärmeleitelementen unter enger Passung in der Kammer gehalten ist. Dabei kann das Heiz- und/oder Kühlelement zwischen den Wärmeelementen verklemmt sein. Dies führt zu einem vollflächigen Kontakt zwischen dem Heiz- und/oder Kühlelement und den Wärmeleitelementen und zu einer guten Wärmeübertragung.

Als Heiz- und/oder Kühlelement kann einerseits der bereits erwähnte Thermistor verwendet werden, alternativ ist es auch möglich, ein Peltier-Element oder eine elektrische Widerstandheizung zu verwenden.

Die Kammer kann einstückig mit dem Rohrkörper ausgebildet sein und vorzugsweise aus dem gleichen Kunststoffmaterial wie dieser bestehen.

Die Kammer kann den Innenraum des Rohrkörpers vollständig überbrücken, d.h. sich zwischen zwei diametral entgegengesetzten Punkten des Querschnitts des Rohrkörpers verlaufen und somit als Scheidewand des Rohrkörpers ausgebildet sein. In bevorzugter Ausgestaltung der Erfindung ist vorgesehen, dass die Kammer in den Innenraum des Rohrkörpers frei auskragt, d.h. von der Wandung des Rohrkörpers sich etwa bis zu dessen Mitte erstreckt und somit bis auf ihren Anschlussbereich, in dem sie an die Wandung des Rohrköpers angeschlossen ist, vollständig von dem Medium umströmt ist.

In bevorzugter Ausgestaltung der Erfindung ist vorgesehen, dass die Kammer an einer Kammeröffnung zugänglich ist, die auf der radialen Außenseite des Rohrkörpers angeordnet ist. Auf diese Weise lässt sich das Heiz- und/oder Kühlelement in einfacher Weise von der Außenseite des Rohrkörpers in die Kammer einsetzen.

Der Begriff "axial" bezieht sich im Rahmen dieser Beschreibung auf die Längsrichtung des Rohrleitungselementes und des Rohrkörpers und somit die Strömungsrichtung. Der Begriff "radial" bezieht sich auf eine dazu senkrecht verlaufende Richtung.

Das Heiz- und/oder Kühlelement ist in seinem in die Kammer eingesetzten Zustand zwischen den Wärmeleitelementen gehalten. Um zuverlässig zu verhindern, dass das Heiz- und/oder Kühlelement aus der Kammer in unbeabsichtigter Weise herausfällt, kann in Weiterbildung der Erfindung vorgesehen sein, dass die Kammeröffnung mit einem Stopfen verschlossen oder mit einem sonstigen Sicherungsteil zumindest teilweise versperrt ist.

Um sicherzustellen, dass das Heiz- und/oder Kühlelement in vorbestimmter Position in der Kammer angeordnet ist, können in der Kammer entsprechende Leit- und Positionierelemente vorgesehen sein. Alternativ oder zusätzlich dazu kann vorgesehen sein, dass das Heiz- und/oder Kühlelement in einem Elemententräger gehalten und zusammen mit dem Elemententräger in die Kammer eingesetzt ist. Bei dem Elemententräger kann es sich beispielsweise um einen an die Abmessungen der Kammer angepassten Einsatzrahmen handeln, der eine Aufnahme für das Heiz- und/oder Kühlelement aufweist, in der das Heiz- und/oder Kühlelement exakt positioniert ist. Nachdem ein Benutzer das Heiz- und/oder Kühlelement in den Elemententräger eingesetzt und dort beispielsweise mittels einer Rastung festgelegt hat, kann der Elemententräger zusammen mit dem Heiz- und/oder Kühlelement in die Kammer eingesetzt und dort unter exakter Passung gehalten werden. Dabei kann vorgesehen sein, dass der Elemententräger gleichzeitig die Kammer beziehungsweise die Kammeröffnung insbesondere vollständig verschließt.

Die Wärmeleitelemente dienen primär dazu, die von dem Heiz- und/oder Kühlelement erzeugte Wärme über eine größere Fläche zu verteilen. In Weiterbildung der Erfindung kann vorgesehen sein, dass die Wärmeleitelemente zusätzlich dazu dienen, an das Heiz- und/oder Kühlelement eine elektrische Spannung anzulegen. Zu diesem Zweck kann vorgesehen sein, dass die Wärmeleitelemente jeweils mit einem Anschlusselement beispielsweise in Form eines elektrischen Kontaktstiftes oder eines Steckers verbunden sind. Die Anschlusselemente sind vorzugsweise vorgefertigt und werden bei der Herstellung des Rohrleitungselementes an diesem befestigt und mit den Wärmeleitelementen verbunden. Wenn die Anschlusselemente mit einer externen elektrischen Spannungsquelle verbunden werden, liegt an dem Heiz- und/oder Kühlelement eine elektrische Spannung an.

Um eine Wärmeverteilung über möglichst den gesamten Umfang des Rohrkörpers zu erreichen, können die Wärmelemente in bevorzugter Ausgestaltung jeweils als Halbschale ausgebildet sein, die den Rohrkörper außenseitig umgreift, wobei jedoch vermieden ist, dass die Wärmeleitelemente miteinander in Kontakt kommen, um einen Kurzschluss zu vermeiden. Insbesondere kann zwischen den einander zugewandten Enden der Wärmeleitelemente ein Distanzelement beispielsweise in Form einer an den Rohrkörper angeformten Trennwand oder Trennrippe vorgesehen sein.

Bei den Wärmeleitelementen kann es sich um vorgefertigte metallene Bauteile handeln, die an dem Rohrkörper montiert sind. Alternativ ist es möglich, dass die Wärmeleitelemente aus einer metallenen Schmelze an den Rohrkörper angespritzt oder angegossen werden.

In einer möglichen Ausgestaltung der Erfindung kann vorgesehen sein, dass der Rohrkörper auf seiner Außenseite radial hervorstehende Rippen aufweist und dass die Wärmeleitelemente zumindest abschnittsweise zwischen den Rippen angeordnet sind. Die Rippen dienen einerseits dazu, dem Rohrkörper eine erhöhte Stabilität insbesondere hinsichtlich Biegung zu verleihen. Darüber hinaus ist es möglich, die Wärmeleitelemente mittels der Rippen in formschlüssiger Weise auf der Außenseite des Rohrkörpers zu halten.

Erfindungsgemäss ist vorgesehen, dass in der Kammer mehrere hervorstehende Distanzrippen vorhanden oder ausgebildet sind und dass das Heiz- und/oder Kühlelement zwischen den Distanzrippen auf Abstand zur Kammerwandung gehalten ist. Die Distanzrippen können dabei an der Kammerwandung und/oder an dem Elemententräger ausgebildet sein. Auf diese Weise nimmt das Heiz- und/oder Kühlelement innerhalb der Kammer eine vorbestimmte Position ein, ohne bereits zwischen den Wärmeleitelementen eingeklemmt zu sein. Ein Zwischenraum zwischen dem Heiz- und/oder Kühlelement und der Kammerwandung wird dann vollständig von dem Material der Wärmeleitelementen ausgefüllt.

Um den Rohrkörper, das Heiz- und/oder Kühlelement und die Wärmeleitelement vor äußeren Einflüssen zu schützen, kann in Weiterbildung der Erfindung eine Umhüllung aus Kunststoff vorgesehen sein, die den Rohrkörper und die Wärmeleitelemente und damit auch die Kammeröffnung zumindest teilweise und vorzugsweise vollständig umhüllt. Die Umhüllung kann dabei eine die Anschlusselemente mit Abstand umgebende Schutzhülse bilden, so dass die Anschlusselemente zusammen mit der Schutzhülse einen Stecker bilden, auf den ein Gegenstecker aufgesetzt werden kann.

Die Umhüllung kann formschlüssig auf dem Rohrkörper gehalten sein, indem das Kunststoff-Material der Umhüllung, das vorzugsweise aufgespritzt wird, Hinterschneidungen des Rohrkörpers hintergreift. Alternativ oder zusätzlich dazu kann vorgesehen sein, dass das Kunststoff-Material der Umhüllung mit dem Kunststoff-Material des Rohrkörpers zumindest abschnittsweise verschweißt ist. Unter einer Verschweißung wird nicht ein oberflächiges Anhaften der Materialien, sondern eine atomare oder molekulare Bindung der Materialien in den Kontaktbereichen verstanden.

Wenn auf der Außenseite des Rohrkörpers die genannten Rippen ausgebildet sind, stehen diese vorzugsweise radial über die Wärmeleitelemente hervor. Auf diese Weise ist es möglich, dass das Kunststoff-Material der Umhüllung mit dem Kunststoff-Material des Rohrkörpers im Bereich der Rippen verschweißt ist.

Hinsichtlich des Verfahrens wird die oben genannte Aufgabe durch ein Verfahren mit den Merkmalen des Anspruchs 19 oder mit den Merkmalen des Anspruchs 20 gelöst.

Zur Herstellung eines Rohleitungselementes des genannten Aufbaus wird zunächst ein Rohrkörper aus Kunststoff gespritzt, der eine in seinen Innenraum hervorstehende Kammer der genannten Art aufweist. Die Kammer ist von einer Kammerwandung begrenzt und gegenüber dem Innenraum des Rohrkörpers abgeschlossen.

In einer ersten Ausgestaltung des Verfahrens wird anschließend in die Kammer ein vorgefertigtes Heiz- und/oder Kühlelement so eingesetzt, dass es auf Abstand zur Kammerwandung angeordnet ist. Anschließend wird eine Metallschmelze so eingespritzt, dass zumindest zwei von einander unabhängige Wärmeleitelemente gebildet werden, die jeweils mit einem Ansatz in die Kammer eingreifen und das Heiz- und/oder Kühlelement kontaktieren. Vorzugsweise sind die Wärmeleitelemente als Halbschalen ausgebildet, die auf der radialen Außenseite des Rohrkörpers aufgespritzt werden und mit dem Ansatz in die Kammer eingreifen und dort mit dem Heiz- und/oder Kühlelement in leitendem Kontakt stehen.

Anschließend wird eine Umhüllung aus Kunststoff aufgespritzt, die den Rohrkörper und die Wärmeleitelemente vollständig umhüllt.

Statt zuerst das vorgefertigte Heiz- und/oder Kühlelement in die Kammer einzusetzen und dann die Wärmeleitelemente durch Aufspritzen einer Metallschmelze auszubilden, kann alternativ vorgesehen sein, dass zunächst eine Metallschmelze so auf den Rohrkörper aufgespritzt wird, dass zumindest die zwei voneinander unabhängigen Wärmeleitelemente gebildet werden, die jeweils mit einem Ansatz in die Kammer eingreifen. Anschließend wird ein vorgefertigtes Heiz- und/oder Kühlelement in die Kammer so zwischen die Wärmeleitelemente eingesetzt, dass es die Wärmeleitelemente kontaktiert. Auch hierbei wird anschließend die Umhüllung aus Kunststoff aufgespritzt.

In Weiterbildung der Erfindung kann vorgesehen sein, dass die Metallschmelze beim Einspritzen mit vorgefertigten elektrischen Anschlusselementen, beispielsweise Kontaktstiften oder Steckern verbunden wird.

Um die Umhüllung sicher auf dem Rohrkörper zu halten, kann die Umhüllung mit dem Rohrkörper in formschlüssigem Eingriff stehen. Alternativ oder zusätzlich dazu kann vorgesehen sein, dass das Kunststoff-Material der Umhüllung mit dem Kunststoff-Material des Rohrkörpers zumindest abschnittsweise verschweißt wird.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: eine perspektivische Ansicht eines erfindungsgemäßen Rohrleitungselementes,
- Fig. 2: den Schnitt II in Figur 1,
- Fig. 3.: eine perspektivische Ansicht eines Rohrkörpers,
- Fig. 4: den Schnitt IV in Figur 3,
- Fig.5: den Rohrkörper gemäß Figur 3 nach Aufbringung der Wärmeleitelemente und Anbringung der Anschlusselemente,
- Fig.6: den Schnitt VI-VI in Figur 5,
- Fig.7: eine perspektivische, teilweise geschnittene Darstellung des Rohrkörpers gemäß Figur 5 bei Einbringung des Heizund/oder Kühlelements,
- Fig.8: die Einbringung des Heiz- und/oder Kühlelements gemäß einem alternativen Ausführungsbeispiel des Verfahrens,
- Fig. 9: den Rohrkörper gemäß Figur 8 nach Einbringung des Heiz- und/oder Kühlelements,
- Fig. 10: den Rohrkörper gemäß Figur 9 nach Aufbringung der Wärmeleitelemente und Anbringung der Anschlusselemente
- Figur 11: eine perspektivische Ansicht des Rohrleitungselements gemäß dem alternativen Ausführungsbeispiel und
- Fig. 12: den Schnitt XII - XII in Figur 11.

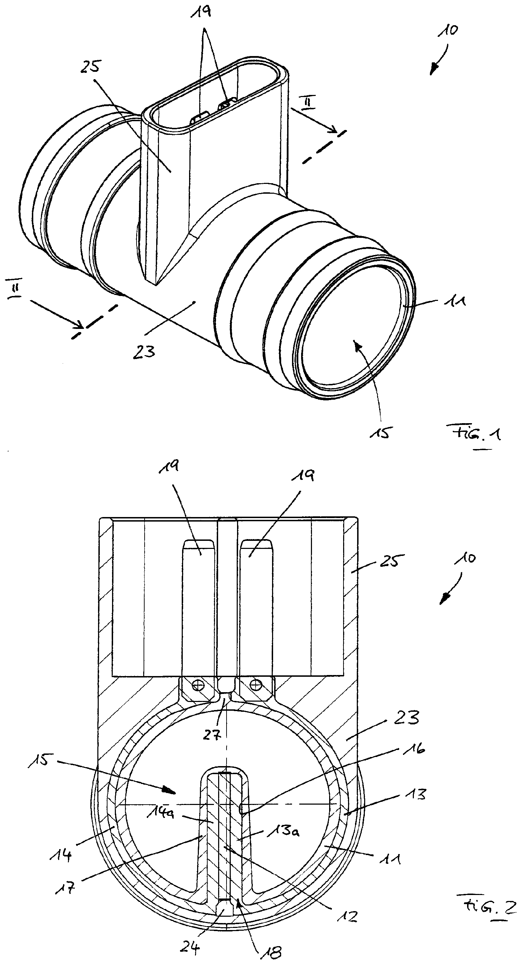

Ein in den Figuren 1 und 2 dargestelltes Rohrleitungselement 10 besitzt ein integriertes Heiz- und/oder Kühlelement und kann in eine Rohrleitung eingebaut werden, um ein in der Rohrleitung strömendes Medium, insbesondere ein Gas, zu kühlen und/oder zu erwärmen und insbesondere auf einer vorbestimmten Temperatur zu halten. Der konstruktive Aufbau des Rohrleitungselementes 10 und das Verfahren zu seiner Herstellung soll im Folgenden anhand der Figuren erläutert werden.

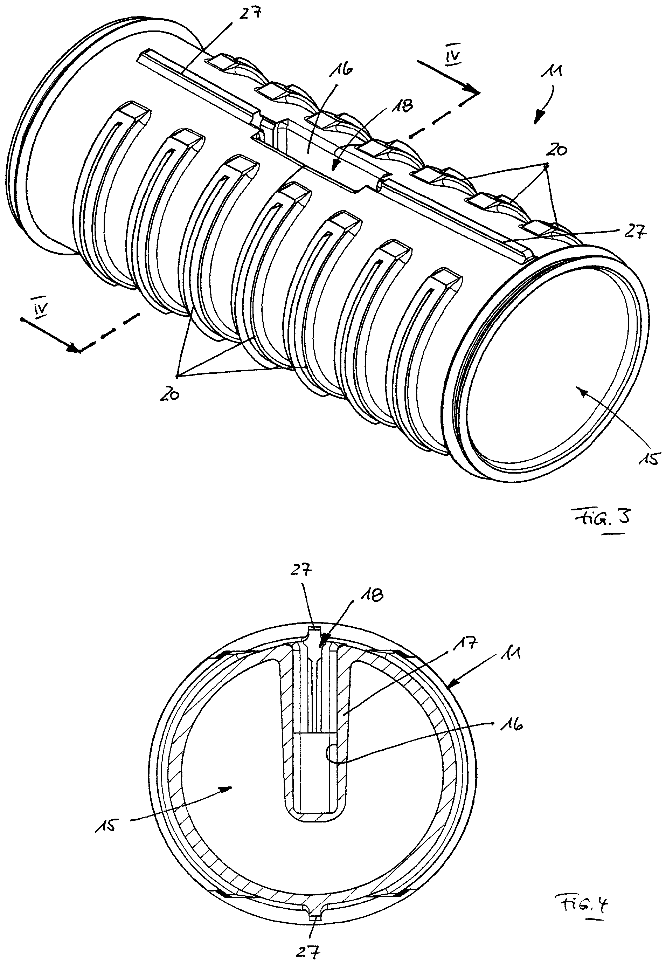

Zunächst wird aus Kunststoff ein Rohrkörper 11 gespritzt, wie er in den Figuren 3 und 4 dargestellt ist. Der Rohrkörper 11 bildet in seinem Innenraum 15 einen Strömungskanalabschnitt und trägt auf seiner radialen Außenseite mehrere in Längsrichtung auf Abstand hintereinander angeordnete, sich über einen Teilbereich des Umfangs erstreckende Rippen 20, die radial vom Rohrkörper 11 hervorstehen. In etwa der Mitte der axialen Länge des Rohrkörpers 11 ist eine Kammeröffnung 18 ausgebildet, die Zugang zu einer Kammer 16 gewährt. Die Kammer 16 ragt in den Innenraum 15 des Rohrkörpers 11 hinein und ist von diesem durch eine Kammerwandung 17 abgegrenzt. Ein in der Kammer 16 befindliches Bauteil ist auf diese Weise durch die Kammerwandung 17 an einem Kontakt mit dem im Innenraum 15 des Rohrkörpers 11 strömenden Medium gehindert.

Im Bereich der Kammeröffnung 18 sind auf der Außenseite des Rohrkörpers 11 zwei in dessen axiale Längsrichtung verlaufende Trennrippen 27 ausgebildet, die radial nach außen hervorstehen. Eine entsprechende axiale Trennrippe 27 ist auf der diametral entgegengesetzten Unterseite des Rohrkörpers 11 ausgebildet (siehe Figur 4).

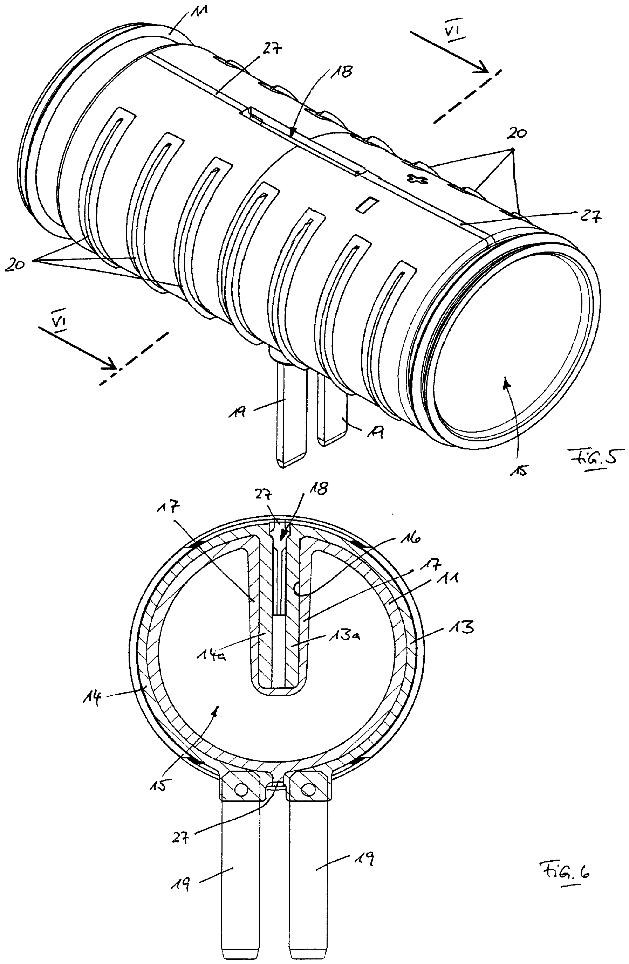

Nachdem der Rohrkörper 11 gemäß den Figuren 3 und 4 hergestellt ist, wird in einem nachfolgenden Verfahrensschritt eine metallene Beschichtung aufgespritzt, die zwei voneinander unabhängige, elektrisch leitende Wärmeleitelemente 13 und 14 bildet. Wie in den Figuren 5 und 6 dargestellt ist, sind diese Wärmeleitelemente 13 und 14 jeweils als Halbschale ausgebildet und umgreifen den Rohrkörper 11 außenseitig über etwa den halben Außenumfang. Die Trennrippen 27 des Rohrkörpers 11 sorgen dafür, dass die beiden Wärmeleitelemente 13 und 14 miteinander nicht in Kontakt kommen.

Wie Figur 5 zeigt, verlaufen die Wärmeleitelemente 13 und 14 zwischen den Rippen 20 des Rohrkörpers 11. Im Bereich der Kammeröffnung 18 erstrecken sich die Wärmeleitelemente 13 und 14 mit je einem Ansatz 13a, 14a jeweils in die Kammer 16 und sind dort unter einem Abstand gegenüberliegend angeordnet, wie es in Figur 6 dargestellt ist.

Auf der der Kammer 16 diametral entgegengesetzten Seite des Rohrkörpers 11 sind die Wärmeleitelemente 13 und 14 jeweils mit einem vorgefertigtem Anschlusselement 19 in Form eines elektrischen Kontaktstiftes verbunden.

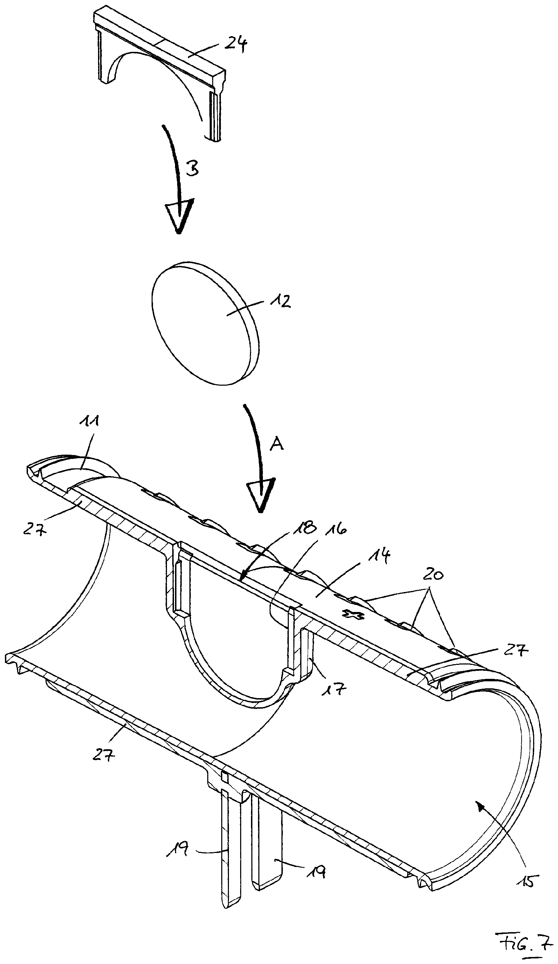

In einem nachfolgenden Verfahrensschritt wird ein vorgefertigtes Heiz- und/oder Kühlelement 12, bei dem es sich gemäß Figur 7 um einen kreisscheibenförmigen Thermistor handeln kann, in die Kammer 16 eingeführt, wie es durch den Pfeil A angeordnet ist. Der Abstand zwischen den innerhalb der Kammer 16 angeordneten Ansätzen 13a, 14a der Wärmeleitelemente 13 und 14 und die Dicke des Heiz- und/oder Kühlelement 12 sind so aufeinander abgestimmt, dass das Heiz- und/oder Kühlelement 12 unter enger Passung zwischen den beiden Wärmeleitelementen 13 und 14 angeordnet und zwischen diesen durch Klemmung fixiert ist. Damit das Heiz- und/oder Kühlelement 12 aus der Kammer 16 nicht mehr herausfallen kann, wird auf die Kammeröffnung 18 außenseitig ein an die Abmessungen des Heiz- und/oder Kühlelement 12 angepasster, portalartiger Stopfen 24 eingesetzt, wie es durch den Pfeil B angedeutet ist.

Die Wärmeleitelemente 13 und 14 liegen auf entgegengesetzten Seiten großflächig an dem in der Kammer 16 befindlichen Heiz- und/oder Kühlelement 12 an. Da die Wärmeleitelemente 13 und 14 aus Metall bestehen und somit elektrisch leitend ausgebildet sind und mit den Anschlusselementen 19 in Verbindung stehen, kann durch Anlegen einer elektrischen Spannung an die Anschlusselemente 19 auch eine elektrische Spannung an das Heiz- und/oder Kühlelement 12 angelegt werden.

In einem weiteren Verfahrensschritt wird auf den Rohrkörper 11 gemäß Figur 7 eine Umhüllung 23 aus Kunststoff aufgespritzt, so dass sich das in den Figuren 1 und 2 dargestellte Rohrleitungselement 10 ergibt. Die Umhüllung 23 kapselt den Rohrkörper 11 auf dessen Mantelfläche vollständig ein und überdeckt somit auch die Wärmeleitelemente 13 und 14 und den in der Kammeröffnung 18 sitzenden Stopfen 24. Die Kunststoff-Materialien einerseits des Rohrkörpers 11 und andererseits der Umhüllung 23 sind so aufeinander abgestimmt, dass das Kunststoff-Material der Umhüllung 23 mit dem Kunststoff-Material des Rohrkörpers 11 insbesondere im Bereich der Rippen 20, die radial nach außen über die Wärmeleitelemente 13, 14 hervorstehen, verschweißt ist.

Wie in den Figuren 1 und 2 gezeigt ist, ist aus dem Kunststoff-Material der Umhüllung 23 auch eine die Anschlusselemente 19 mit Abstand umgebende Schutzhülse 25 gebildet, die als Stecker für den Anschluss von weiterführenden Leitungen dient.

Wie Figur 2 zu entnehmen ist, kragt die Kammer 16 von der Wandung des Rohrkörpers 11 frei in den Innenraum 15 des Rohrkörpers 11 hinein und besitzt eine Kraglänge von etwa 60 Prozent des Innendurchmessers des Rohrkörpers 11.

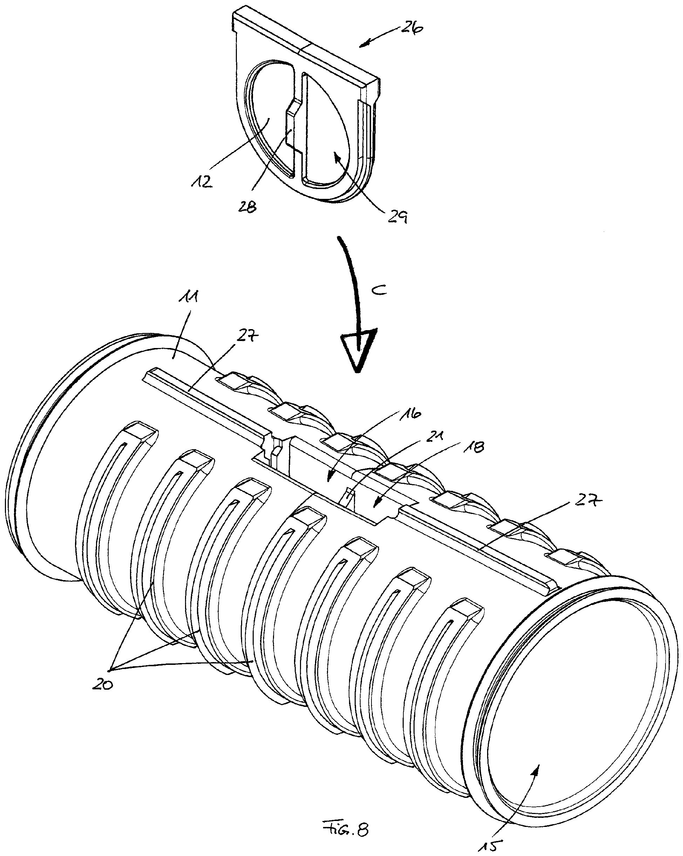

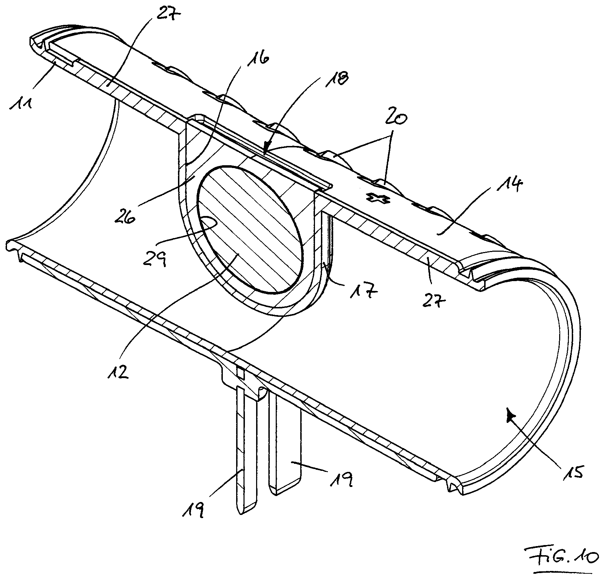

Die Figuren 8 bis 12 zeigen eine geringfügige Abwandlung des Rohrleitungselementes 10, das mittels eines in der Abfolge geänderten Verfahrens hergestellt wird. Während bei dem Rohrleitungselement 10 gemäß den Figuren 1 bis 7 zunächst die Wärmeleitelemente 13, 14 durch Aufspritzen einer Metallschmelze hergestellt und anschließend das Heiz- und/oder Kühlelement 12 in die Kammer 16 eingesetzt beziehungsweise eingedrückt wird, ist nunmehr vorgesehen, zuerst das Heiz- und/oder Kühlelement 12 in der Kammer 16 zu positionieren und anschließend die Wärmeleitelemente 13, 14 durch Aufspritzen einer Metallschmelze auszubilden.

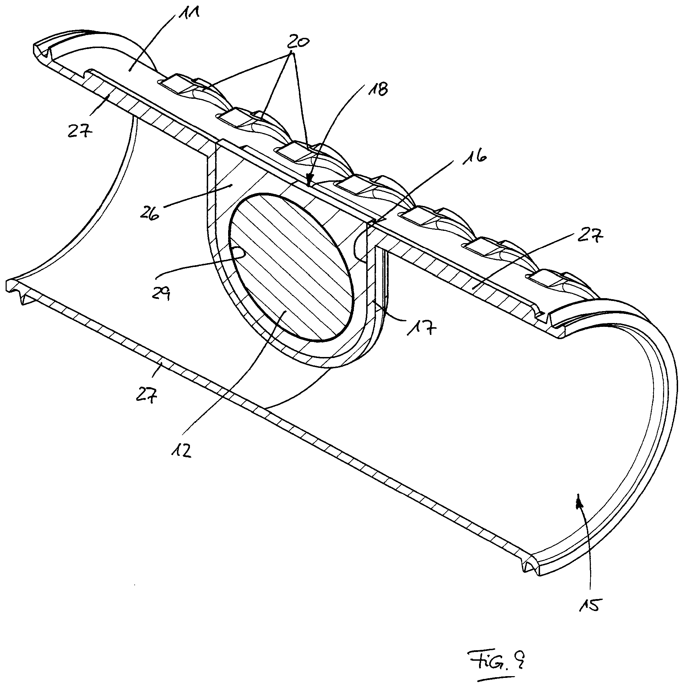

Zunächst wird ein Rohrkörper 11 aus Kunststoff gespritzt, der sich von dem vorgenannten Rohrkörper 11 lediglich dadurch unterscheidet, dass in der Kammer 16 zumindest eine Distanzrippe 21 ausgebildet ist. Zusätzlich ist ein rahmenartiger Elemententräger 26 aus Kunststoff vorgesehen, der eine Aufnahme 29 für das Heiz- und/oder Kühlelement 12 sowie eine weitere Distanzrippe 28 aufweist. Das Heiz- und/oder Kühlelement 12 wird in den Elemententräger 26 eingesetzt und dann zusammen mit diesem durch die Kammeröffnung 18 in die Kammer 16 eingesetzt, wie es durch den Pfeil C angeordnet ist. In diesem Zustand sorgen die Distanzrippen 21 und 28 dafür, dass das Heiz- und/oder Kühlelement 12 zwischen den Distanzrippen 21, 28 auf Abstand zur Kammerwandung 17 gehalten ist. Dieser Zustand ist in Figur 9 dargestellt.

Anschließend wird die Metallschmelze aufgespritzt, die die Wärmeleitelemente 13 und 14 genannten Aufbaus bilden. Die die Wärmeleitelemente 13 und 14 bildende Metallschmelze dringt auch in einen Zwischenraum 22 zwischen dem Heiz- und/oder Kühlelement 12 und der Kammerwandung 17 ein, sodass in der Kammer 16 die Ansätze 13a, 14a der Wärmeleitelemente 13 und 14 gebildet sind, die von verschiedenen Seiten an dem Heiz- und/oder Kühlelement 12 anliegen.

Mit der Aufbringung der Metallschmelze werden auch hierbei die Anschlusselemente 19 in genannter Weise mit jeweils einen der Wärmeleitelemente 13, 14 verbunden.

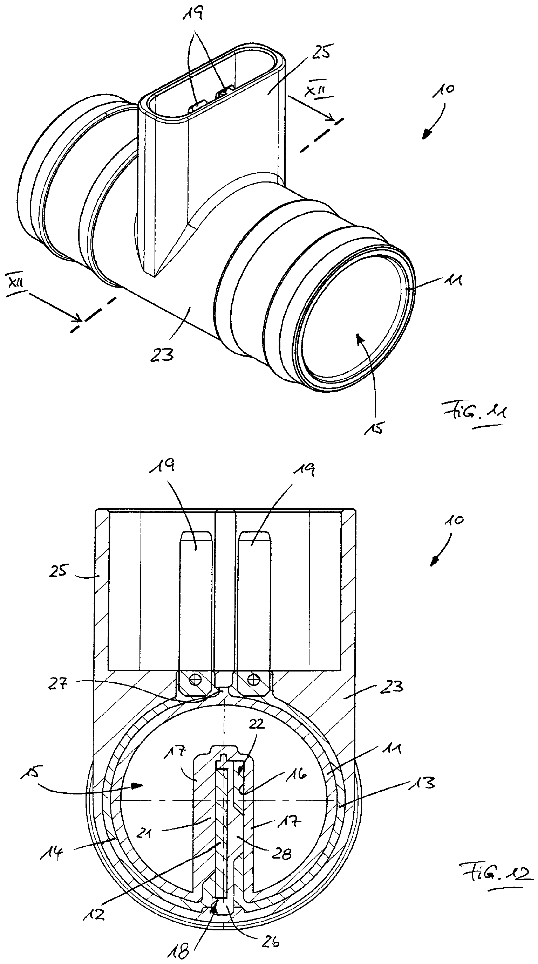

Anschließend wird die Umhüllung 23 aufgespritzt, so dass das in den Figuren 11 und 12 dargestellte Rohrleitungselement 10 gebildet ist, das sich von dem Rohrleitungselement gemäß den Figuren 1 und 2 lediglich im konstruktiven Aufbau der Halterung des Heiz- und/oder Kühlelements 12 innerhalb der Kammer 16 unterscheidet.

## Patentansprüche

1. Rohrleitungselement (10) mit einer integrierten Heiz- und/oder Kühlvorrichtung, mit einem Rohrkörper (11), der in seinem Innenraum (15) einen Strömungskanalabschnitt bildet und an dem ein elektrisches Heiz- und/oder Kühlelement (12) gehalten ist, und mit zumindest einem Wärmeleitelement (13, 14), das mit dem elektrischen Heiz- und/oder Kühlelement (12) in Anlage steht, wobei der Rohrkörper (11) eine in seinen Innenraum (15) hervorstehende Kammer (16) aufweist, die von einer Kammerwandung (17) begrenzt und gegenüber dem Innenraum (15) des Rohrkörpers (11) abgeschlossen ist, wobei das Heiz- und/oder Kühlelement (12) in die Kammer (16) eingesetzt ist und wobei zumindest zwei voneinander unabhängige metallische Wärmeleitelemente (13, 14) vorgesehen sind, die jeweils in die Kammer (16) eingreifen und auf entgegengesetzten Seiten mit dem Heiz- und/oder Kühlelement (12) in Anlage stehen, **dadurch gekennzeichnet, dass** der Rohrkörper (11) aus Kunststoff besteht, dass in der Kammer (16) mehrere hervorstehende Distanzrippen (21, 28) vorhanden sind und dass das Heiz- und/oder Kühlelement (12) zwischen den Distanzrippen (21, 28) auf Abstand zur Kammerwandung (17) gehalten ist, wobei ein Zwischenraum (22) zwischen dem Kühl- und/oder Heizelement (12) und der Kammerwandung (17) von dem Material der Wärmeleitelemente (13, 14) ausgefüllt ist.

2. Rohrleitungselement nach Anspruch 1, **dadurch gekennzeichnet, dass** die Distanzrippen (21) an der Kammerwandung (17) ausgebildet sind.

3. Rohrleitungselement nach Anspruch 1 oder 2, **dadurch gekennzeichnet, dass** das Heiz- und/oder Kühlelement (12) in einem Elemententräger (26) gehalten und zusammen mit dem Elemententräger (26) in die Kammer (16) eingesetzt ist.

4. Rohrleitungselement nach Anspruch 3, **dadurch gekennzeichnet, dass** die Distanzrippen (28) an dem Elemententräger (26) ausgebildet sind.

5. Rohrleitungselement nach Anspruch 3, **dadurch gekennzeichnet, dass** der Elemententräger (26) die Kammer (16) verschließt.

6. Rohrleitungselement nach einem der Ansprüche 1 bis 5, **dadurch gekennzeichnet, dass** das Heiz- und/oder Kühlelement (12) zwischen den Wärmeleitelementen (13, 14) unter enger Passung in der Kammer (16) gehalten ist.

7. Rohrleitungselement nach einem der Ansprüche 1 bis 6, **dadurch gekennzeichnet, dass** das Heiz- und/oder Kühlelement (12) ein Thermistor oder ein Peltier-Element ist.

8. Rohrleitungselement nach einem der Ansprüche 1 bis 7, **dadurch gekennzeichnet, dass** die Kammer (16) in den Innenraum (15) des Rohrkörpers (11) frei auskragt.

9. Rohrleitungselement nach einem der Ansprüche 1 bis 8, **dadurch gekennzeichnet, dass** die Kammer (16) an einer Kammeröffnung (18) zugänglich ist, die auf der radialen Außenseite des Rohrkörpers (11) angeordnet ist.

10. Rohrleitungselement nach Anspruch 9, **dadurch gekennzeichnet, dass** die Kammeröffnung (18) mit einem Stopfen (24) verschlossen ist.

11. Rohrleitungselement nach einem der Ansprüche 1 bis 10, **dadurch gekennzeichnet, dass** die Wärmeleitelemente (13, 14) jeweils mit einem Anschlusselement (19) verbunden sind und dass über die Anschlusselemente (19) und die Wärmeleitelemente (13, 14) an das Heiz- und/oder Kühlelement (12) eine elektrische Spannung anlegbar ist.

12. Rohrleitungselement nach einem der Ansprüche 1 bis 11, **dadurch gekennzeichnet, dass** die Wärmeleitelemente (13, 14) jeweils als Halbschale ausgebildet sind, die den Rohrkörper (11) außenseitig umgreift.

13. Rohrleitungselement nach einem der Ansprüche 1 bis 12, **dadurch gekennzeichnet, dass** der Rohrkörper (11) auf seiner Außenseite radial hervorstehende Rippen (20) aufweist und dass die Wärmeleitelemente (13, 14) zumindest abschnittsweise zwischen den Rippen (20) angeordnet sind.

14. Rohrleitungselement nach einem der Ansprüche 1 bis 13, **dadurch gekennzeichnet, dass** eine Umhüllung (23) aus Kunststoff vorgesehen ist, die den Rohrkörper (11) und die Wärmeleitelemente (13, 14) vollständig umhüllt.

15. Rohrleitungselement nach Anspruch 14, **dadurch gekennzeichnet, dass** die Umhüllung (23) eine die Anschlusselemente (19) mit Abstand umgebende Schutzhülse (25) bildet.

16. Rohrleitungselement nach Anspruch 14 oder 15, **dadurch gekennzeichnet, dass** das Kunststoff-Material der Umhüllung (23) mit dem Kunststoff-Material des Rohrkörpers (11) zumindest abschnittsweise verschweißt ist.

17. Rohrleitungselement nach Anspruch 16, **dadurch gekennzeichnet, dass** das Kunststoff-Material der Umhüllung (23) mit dem Kunststoff-Material des Rohrkörpers (11) im Bereich der Rippen (20) verschweißt ist.

18. Verfahren zur Herstellung eines Rohrleitungselementes gemäß einem der Ansprüche 1 bis 17, wobei zunächst ein Rohrkörper (11) aus Kunststoff gespritzt wird, der eine in seinen Innenraum (15) hervorstehende Kammer (16) aufweist, die von einer Kammerwandung (17) begrenzt und gegenüber dem Innenraum (15) des Rohrkörpers (11) abgeschlossen ist, wobei anschließend in die Kammer (16) ein vorgefertigtes Heiz- und/oder Kühlelement (12) so eingesetzt wird, dass es auf Abstand zur Kammerwandung (17) angeordnet ist, wobei anschließend eine Metallschmelze so eingespritzt wird, dass zumindest zwei voneinander unabhängige Wärmeleitelemente (13, 14) gebildet werden, die jeweils mit einem Ansatz (13a, 14a) in die Kammer (16) eingreifen und das Heiz- und/oder Kühlelement (12) kontaktieren, und wobei anschließend eine Umhüllung (23) aus Kunststoff aufgespritzt wird, die den Rohrkörper (11) und die Wärmeleitelemente (13, 14) vollständig umhüllt.

19. Verfahren zur Herstellung eines Rohrleitungselementes gemäß einem der Ansprüche 1 bis 17, wobei zunächst ein Rohrkörper (11) aus Kunststoff gespritzt wird, der eine in seinen Innenraum (15) hervorstehende Kammer (16) aufweist, die von einer Kammerwandung (17) begrenzt und gegenüber dem Innenraum (15) des Rohrkörpers (11) abgeschlossen ist, wobei anschließend eine Metallschmelze so eingespritzt wird, dass zumindest zwei voneinander unabhängige Wärmeleitelemente (13, 14) gebildet werden, die jeweils mit einem Ansatz (13a, 14a) in die Kammer (16) eingreifen, wobei anschließend in die Kammer (16) ein vorgefertigtes Heiz- und/oder Kühlelement (12) so zwischen die Wärmeleitelemente (13, 14) eingesetzt wird, dass es die Wärmeleitelemente (13, 14) kontaktiert, und wobei anschließend eine Umhüllung (23) aus Kunststoff aufgespritzt wird, die den Rohrkörper (11) und die Wärmeleitelemente (13, 14) vollständig umhüllt.

20. Verfahren nach Anspruch 18 oder 19, **dadurch gekennzeichnet, dass** die Metallschmelze beim Einspritzen mit vorgefertigten elektrischen Anschlusselementen (19) verbunden wird.

21. Verfahren nach einem der Ansprüche 18 bis 20, **dadurch gekennzeichnet, dass** das Kunststoff-Material der Umhüllung (23) mit dem Kunststoff-Material des Rohrkörpers (11) zumindest abschnittsweise verschweißt wird.

## Claims

1. Pipeline element (10) comprising an integrated heating and/or cooling device, comprising a pipe body (11) which forms a flow channel portion in its interior (15) and on which an electrical heating and/or cooling element (12) is held, and comprising at least one heat-conducting element (13, 14) which is in contact with the electrical heating and/or cooling element (12), the pipe body (11) having a chamber (16) which protrudes into its interior (15), is delimited by a chamber wall (17) and is closed off from the interior (15) of the pipe body (11), the heating and/or cooling element (12) being inserted into the chamber (16) and at least two mutually independent metal heat-conducting elements (13, 14) being provided which each engage in the chamber (16) and are in contact with the heating and/or cooling element (12) on opposite sides, **characterized in that** the pipe body (11) is made of plastics material, **in that** a plurality of protruding spacer ribs (21, 28) are present in the chamber (16), and **in that** the heating and/or cooling element (12) is held between the spacer ribs (21, 28) at a distance from the chamber wall (17), with an intermediate space (22) between the cooling and/or heating element (12) and the chamber wall (17) being filled by the material of the heat-conducting elements (13, 14).

2. Pipeline element according to claim 1, **characterized in that** the spacer ribs (21) are formed on the chamber wall (17).

3. Pipeline element according to either claim 1 or claim 2, **characterized in that** the heating and/or cooling element (12) is held in an element carrier (26) and is inserted into the chamber (16) together with the element carrier (26).

4. Pipeline element according to claim 3, **characterized in that** the spacer ribs (28) are formed on the element carrier (26).

5. Pipeline element according to claim 3, **characterized in that** the element carrier (26) closes the chamber (16).

6. Pipeline element according to any of claims 1 to 5, **characterized in that** the heating and/or cooling element (12) is held between the heat-conducting elements (13, 14) with a tight fit in the chamber (16).

7. Pipeline element according to any of claims 1 to 6, **characterized in that** the heating and/or cooling element (12) is a thermistor or a Peltier element.

8. Pipeline element according to any of claims 1 to 7, **characterized in that** the chamber (16) projects freely into the interior (15) of the pipe body (11).

9. Pipeline element according to any of claims 1 to 8, **characterized in that** the chamber (16) is accessible at a chamber opening (18) which is arranged on the radially outer side of the pipe body (11).

10. Pipeline element according to claim 9, **characterized in that** the chamber opening (18) is closed with a plug (24).

11. Pipeline element according to any of claims 1 to 10, **characterized in that** the heat-conducting elements (13, 14) are each connected to a connection element (19) and **in that** an electrical voltage can be applied to the heating and/or cooling element (12) via the connection elements (19) and the heat-conducting elements (13, 14).

12. Pipeline element according to any of claims 1 to 11, **characterized in that** the heat-conducting elements (13, 14) are each designed as a half-shell which surrounds the pipe body (11) on the outside.

13. Pipeline element according to any of claims 1 to 12, **characterized in that** the pipe body (11) has radially protruding ribs (20) on its outer side and **in that** the heat-conducting elements (13, 14) are arranged, at least in portions, between the ribs (20).

14. Pipeline element according to any of claims 1 to 13, **characterized in that** a casing (23) made of plastics material is provided which completely encases the pipe body (11) and the heat-conducting elements (13, 14).

15. Pipeline element according to claim 14, **characterized in that** the casing (23) forms a protective sleeve (25) which surrounds the connection elements (19) at a distance.

16. Pipeline element according to either claim 14 or claim 15, **characterized in that** the plastics material of the casing (23) is welded, at least in portions, to the plastics material of the pipe body (11).

17. Pipeline element according to claim 16, **characterized in that** the plastics material of the casing (23) is welded to the plastics material of the pipe body (11) in the region of the ribs (20).

18. Method for producing a pipeline element according to any of claims 1 to 17, wherein, firstly, a pipe body (11) is injection-molded from plastics material, which body has a chamber (16) which protrudes into its interior (15), is delimited by a chamber wall (17) and is closed off from the interior (15) of the pipe body (11), wherein a prefabricated heating and/or cooling element (12) is then inserted into the chamber (16) in such a way that it is arranged at a distance from the chamber wall (17), wherein a molten metal is then injected in such a way that at least two mutually independent heat-conducting elements (13, 14) are formed, each of which engages in the chamber (16) via a projection (13a, 14a) and makes contact with the heating and/or cooling element (12), and wherein a casing (23) is then over-molded from plastics material and completely encases the pipe body (11) and the heat-conducting elements (13, 14).

19. Method for producing a pipeline element according to any of claims 1 to 17, wherein, firstly, a pipe body (11) is injection-molded from plastics material, which body has a chamber (16) which protrudes into its interior (15), is delimited by a chamber wall (17) and is closed off from the interior (15) of the pipe body (11), wherein a molten metal is then injected in such a way that at least two mutually independent heat-conducting elements (13, 14) are formed, each of which engages in the chamber (16) via a projection (13a, 14a), and wherein a prefabricated heating and/or cooling element (12) is then inserted into the chamber (16) between the heat-conducting elements (13, 14) such that it contacts the heat-conducting elements (13, 14), and wherein a casing (23) is then over-molded from plastics material and completely encases the pipe body (11) and the heat-conducting elements (13, 14).

20. Method according to either claim 18 or claim 19, **characterized in that** the molten metal is connected to prefabricated electrical connection elements (19) during injection.

21. Method according to any of claims 18 to 20, **characterized in that** the plastics material of the casing (23) is welded, at least in portions, to the plastics material of the pipe body (11).

## Revendications

1. Élément de tuyauterie (10) comportant un dispositif de chauffage et/ou de refroidissement intégré, comportant un corps de tuyau (11) qui forme dans son espace intérieur (15) une section de canal d'écoulement et au niveau duquel un élément de chauffage et/ou de refroidissement (12) électrique est maintenu, et comportant au moins un élément conducteur de chaleur (13, 14) qui est en contact avec l'élément de chauffage et/ou de refroidissement (12) électrique, le corps de tuyau (11) présentant une chambre (16) qui fait saillie dans son espace intérieur (15), laquelle chambre étant délimitée par une paroi de chambre (17) et étant close par rapport à l'espace intérieur (15) du corps de tuyau (11), l'élément de chauffage et/ou de refroidissement (12) étant inséré dans la chambre (16) et au moins deux éléments métalliques conducteurs de chaleur (13, 14) indépendants l'un de l'autre étant prévus, lesquels au moins deux éléments métalliques conducteurs de chaleur venant chacun en prise dans la chambre (16) et étant en contact avec l'élément de chauffage et/ou de refroidissement (12) sur des côtés opposés, **caractérisé en ce que** le corps de tuyau (11) est constitué de matière plastique, **en ce que** plusieurs nervures d'écartement (21, 28) saillantes sont prévues dans la chambre (16) et **en ce que** l'élément de chauffage et/ou de refroidissement (12) est maintenu entre les nervures d'écartement (21, 28) à distance de la paroi de chambre (17), un espace intermédiaire (22) entre l'élément de refroidissement et/ou de chauffage (12) et la paroi de chambre (17) étant rempli par la matière des éléments conducteurs de chaleur (13, 14).

2. Élément de tuyauterie selon la revendication 1, **caractérisé en ce que** les nervures d'écartement (21) sont réalisées au niveau de la paroi de chambre (17).

3. Élément de tuyauterie selon la revendication 1 ou 2, **caractérisé en ce que** l'élément de chauffage et/ou de refroidissement (12) est maintenu dans un support d'éléments (26) et est inséré dans la chambre (16) conjointement avec le support d'éléments (26).

4. Élément de tuyauterie selon la revendication 3, **caractérisé en ce que** les nervures d'écartement (28) sont réalisées au niveau du support d'éléments (26).

5. Élément de tuyauterie selon la revendication 3, **caractérisé en ce que** le support d'éléments (26) ferme la chambre (16).

6. Élément de tuyauterie selon l'une des revendications 1 à 5, **caractérisé en ce que** l'élément de chauffage et/ou de refroidissement (12) est maintenu entre les éléments conducteurs de chaleur (13, 14) à l'aide d'un ajustement étroit dans la chambre (16).

7. Élément de tuyauterie selon l'une des revendications 1 à 6, **caractérisé en ce que** l'élément de chauffage et/ou de refroidissement (12) est une thermistance ou un élément Peltier.

8. Élément de tuyauterie selon l'une des revendications 1 à 7, **caractérisé en ce que** la chambre (16) fait saillie librement dans l'espace intérieur (15) du corps de tuyau (11).

9. Élément de tuyauterie selon l'une des revendications 1 à 8, **caractérisé en ce que** la chambre (16) est accessible au niveau d'une ouverture de chambre (18) qui est disposée sur le côté extérieur radial du corps de tuyau (11).

10. Élément de tuyauterie selon la revendication 9, **caractérisé en ce que** l'ouverture de chambre (18) est fermée par un bouchon (24).

11. Élément de tuyauterie selon l'une des revendications 1 à 10, **caractérisé en ce que** les éléments conducteurs de chaleur (13, 14) sont chacun reliés à un élément de connexion (19) et **en ce qu'**une tension électrique peut être appliquée à l'élément de chauffage et/ou de refroidissement (12) par l'intermédiaire des éléments de connexion (19) et des éléments conducteurs de chaleur (13, 14).

12. Élément de tuyauterie selon l'une des revendications 1 à 11, **caractérisé en ce que** les éléments conducteurs de chaleur (13, 14) sont chacun réalisés sous la forme d'une demicoque qui entoure le corps de tuyau (11) côté extérieur.

13. Élément de tuyauterie selon l'une des revendications 1 à 12, **caractérisé en ce que** le corps de tuyau (11) présente des nervures (20) faisant saillie radialement sur son côté extérieur et **en ce que** les éléments conducteurs de chaleur (13, 14) sont disposés au moins dans certaines régions entre les nervures. (20).

14. Élément de tuyauterie selon l'une des revendications 1 à 13, **caractérisé en ce qu'**une enveloppe (23) constituée de matière plastique est prévue, laquelle enveloppe enveloppe entièrement le corps de tuyau (11) et les éléments conducteurs de chaleur (13, 14).

15. Élément de tuyauterie selon la revendication 14, **caractérisé en ce que** l'enveloppe (23) forme un manchon de protection (25) entourant à distance les éléments de connexion (19).

16. Élément de tuyauterie selon la revendication 14 ou 15, **caractérisé en ce que** la matière plastique de l'enveloppe (23) est soudée au moins dans certaines régions à la matière plastique du corps de tuyau (11).

17. Élément de tuyauterie selon la revendication 16, **caractérisé en ce que** la matière plastique de l'enveloppe (23) est soudée à la matière plastique du corps de tuyau (11) au niveau des nervures (20).

18. Procédé de fabrication d'un élément de tuyauterie selon l'une des revendications 1 à 17, dans lequel un corps de tuyau (11) est d'abord injecté de matière plastique, lequel corps de tuyau présente une chambre (16) faisant saillie dans son espace intérieur (15), laquelle chambre est délimitée par une paroi de chambre (17) et est close par rapport à l'espace intérieur (15) du corps de tuyau (11), dans lequel un élément de chauffage et/ou de refroidissement (12) préfabriqué est ensuite inséré dans la chambre (16) de manière à être disposé à distance de la paroi de chambre (17), dans lequel un métal fondu est ensuite injecté de manière à former au moins deux éléments conducteurs de chaleur (13, 14) indépendants l'un de l'autre, lesquels deux éléments conducteurs de chaleur viennent chacun en prise avec une saillie (13a, 14a) dans la chambre (16) et entrent en contact avec l'élément de chauffage et/ou de refroidissement (12), et dans lequel une enveloppe (23) est ensuite injectée de matière plastique, laquelle enveloppe enveloppe entièrement le corps de tuyau (11) et les éléments conducteurs de chaleur (13, 14).

19. Procédé de fabrication d'un élément de tuyauterie selon l'une des revendications 1 à 17, dans lequel un corps de tuyau (11) est d'abord injecté de matière plastique, lequel corps de tuyau présente une chambre (16) faisant saillie dans son espace intérieur (15), laquelle chambre est délimitée par une paroi de chambre (17) et est close par rapport à l'espace intérieur (15) du corps de tuyau (11), dans lequel un métal fondu est ensuite injecté de manière à former au moins deux éléments conducteurs de chaleur (13, 14) indépendants l'un de l'autre, lesquels deux éléments conducteurs de chaleur viennent chacun en prise avec une saillie (13a, 14a) dans la chambre (16), dans lequel un élément de chauffage et/ou de refroidissement (12) préfabriqué est ensuite inséré entre les éléments conducteurs de chaleur (13, 14) dans la chambre (16) de manière à entrer en contact avec les éléments conducteurs de chaleur (13, 14), et dans lequel une enveloppe (23) est ensuite injectée de matière plastique, laquelle enveloppe enveloppe entièrement le corps de tuyau (11) et les éléments conducteurs de chaleur (13, 14).

20. Procédé selon la revendication 18 ou 19, **caractérisé en ce que** le métal fondu est relié à des éléments de connexion électriques (19) préfabriqués lors de l'injection.

21. Procédé selon l'une des revendications 18 à 20, **caractérisé en ce que** la matière plastique de l'enveloppe (23) est soudée au moins dans certaines régions à la matière plastique du corps de tuyau (11).
